# EUROPEAN PATENT APPLICATION

(11) **EP 2 096 851 A1**
(43) Date of publication of application: **02.09.2009**
(21) Application number: 07831018.2
(22) Date of filing: 01.11.2007
(51) Int. Cl.: H04N 1/00, G06F 3/12, G06F 17/21, G06T 11/60

(54) **IMAGE LAYOUT SYSTEM USING COMMUNICATION NETWORK**

(30) Priority: 07.11.2006 JP 2006301994
(71) Applicant: Lab. At-Site, Ltd., Nagoya-shi, Aichi 4520831 (JP)
(72) Inventor: YAMAMOTO, Takemi, Nagoya-shi Aichi 4520831 (JP)
(74) Representative: Smyth, Gyles Darren
(86) International application number: PCT/JP2007/071284
(87) International publication number: WO 2008/056589

(57) **Abstract**

In an entire structure comprising internet network (20), a server (200) connected thereto, a base station of cell-phone network (40), a cell-phone (100), a removable medium equipped for the cell-phone (100) and a printer (30) having a slot for the removable medium, image data or character data uploaded to the server (200) from the cell-phone (100) having a camera is converted to the image data or the document data having appropriate image quality modification and layout applied thereto at the server, and then downloaded to the cell-phone (100). The data is stored in the removable media (10), and further transferred to the printer (30) so as to be printed on an appropriate medium. Herewith, by using communication network, it provides a system of applying layout to data sent from a communication terminal, converting it, and then returning it.

## Description

### RELATED APPLICATION

This application is a National Stage entry of International Application No.PCT/JP2007/071284, filed on November 1, 2007, the entire specification claims and drawings of which are incorporated herewith by reference.

### BACKGROUND OF THE INVENTION

### [Field of the Invention]

This invention relates to an image layout system using communication network.

### [Background of the Art]

Today cell-phones with camera are widely used, however picture data taken therewith do not seem to be used effectively. One reason we can think of is because it is difficult to use. An image taken by a camera provided to a cell phone itself often has poor image quality, thus in order to modify the image, the picture image has to be transferred to a personal computer (PC) somehow, and then modified with an image modification software running on the PC. Also, when you want to edit it to give something extra, for example you want to apply a variety of the layouts to the picture data, you have to use a PC similarly. Accordingly, for example, when pictures are taken with a camera of the cell-phone at get-together, if you want to print and give them away after amendment or giving something extra, unless there is a PC around you, you have to go home for edit, and thus you can not give them away right then.

This inconvenience can be found not only for picture data, but many kinds of data dealt with at mobile information terminals. For example, when you need a business card outside urgently, even if there is information to be printed on a business card at the mobile information terminal, it depends on a business card making software running on a PC, and thus a business card can not be produced unless there is a PC close-by.

The Patent Document 1 discloses a printing system using a photo server having essential features that picture data taken with a cell-phone with camera is sent to a photo server through internet network, held it temporarily, and then sent it to a printing terminal to be printed. However, the system can be inconvenient for users in such aspects that this system has to have relatively high capabilities required for the printing terminal to the system, also the picture data is sent to the printing terminal, and the user has to select the printing terminal. Especially ID check or the like is complicated when pick up.

Patent Document 1: Japanese Laid-Open Patent Publication No. 2004-78311

### PROBLEM TO BE SOLVED BY THE INVENTION

The problem to be solved by this invention, by studying the above problems, is to provide a system using communication network of applying layout to image data or character data sent from a communication terminal and converting it to any one or more of image data and document data to be returned. Also, it is to eliminate complications such as ID check at pick up.

### MEANS FOR SOLVING THE PROBLEM

In order to solve the above problems, An image layout system using communication network comprises:
a communication terminal provided with a memory means:
a server connected to a communication network:
a sending means capable of sending any one or more of image data and character data though the communication network from the communication terminal to the server:
a converting means capable of storing in the server and converting any one or more of the image data and the character data to one or more of layout image document data of any one or more of image data and document data having the image data and the character data applied with predetermined layout:
a returning means capable of returning the layout image document data through the communication network having applied the conversion thereto from the server to the communication terminal; and
a storage means capable of storing the layout image document data communicated by the returning means in the memory means of the communication terminal, wherein
the layout image document data stored in the memory means is provided or sent to a printing device, so that the layout image document data is allowed to be printed on a predetermined printing medium by the layout image document data.

The image layout system using communication network system sends any one or more of image data and character data from the communication terminal through the communication network to the server, applies layout thereto on the server, and then return the layout image document data to the communication terminal. Accordingly, functions required to the communication terminal is only input function of a plurality of image data or character data, communication function and memory function associated therewith. Further, edit related to layout of images and documents is all conducted on the server, and thus image and document edit function is not required at the communication terminal. Also, a PC is not used to edit image and document. Accordingly, even in an environment having no image and document edit function, image and document edit can be realized using this system as long as it has network function.

Also, the image data and document data to which layout is applied are returned to the communication terminal, and thus a user of this system can immediately moves to printing process and obtain the printed result by storing the image data and the document data on an external memory medium and using a printer which is connectable to the medium or transferring the image data and the document data to the printer by another method such as data wireless communication. Functions required for the printer in this system are only basic functions, which are capable of connecting to an external memory medium, receiving data from a communication terminal such as being compatible to data wireless communication or the like, and printing image data and document data on a predetermined sheet. The image data and the document data after being converted are returned to the user, and thus the user can hold the image data and the document data which only have the printing process left. Also, as above, a terminal on the sending side receives the image data and the document data to which layout is applied, so as to eliminate complications such as ID check.

Regarding this system, the communication terminal can be a mobile communication terminal. This allows to use this system from an outside location. Accordingly, image and document layout work can be done by this system from an outside location. Today printers, which are capable of receiving data from a mobile information terminal such as capable of connecting to an external memory medium or data wireless communication, are widely installed at convenience stores or the like, and thus the image and documents to which layout is applied can be printed from an outside location by using them.

Also, the communication terminal can be a cell-phone with camera, and one or more of the image data sent from the communication terminal can be picture image data taken by the camera provided with the cell-phone with camera. Herewith, it allowed to apply layout to picture data taken with the camera provided with the cell-phone with camera from an outside location on network, and then return it to the cell-phone immediately by using this system. Accordingly it is possible to add some attractive values to the picture data taken from an outside location, print and give them away immediately.

With the image layout system using communication network of this invention,
the image data is picture image data,
any one or more of the image data and the character data is a plurality of the picture image data,
the layout image document data is album image data of image data having a plurality of the picture image data arranged with a predetermined layout on one or more pieces of paper having a predetermined size and
the album image data is provided or sent to the printing device, so as to be printable to a printing medium suitable for making an album.

Herewith, even in a situation having no image edit function, it is possible to convert a plurality of holding picture data to image data in a format suitable for making an album by using network. Accordingly, it is possible to make an album in an easy way, by sending the data through an external memory medium, data wireless communication or the like to a printer.

With the image layout system using communication network of this invention,
sticker section image data, to be a section of sticker image is stored in the server,
the layout image document data is sticker image data prepared by combining the sticker section image data and any one or more of the image data and the character data and
the sticker image data is provided or sent to the printing device so as to be printable to a printing medium suitable for making a sticker.

Herewith, even in a situation having no image edit function, it is possible to convert holding image data to image data in a format suitable for making a sticker by using network. Accordingly, it is possible to make a sticker in an easy way, by sending the data through an external memory medium, data wireless communication or the like to a printer.

With the image layout system using communication network of this invention,
label section image data, to be a section of label image is stored in the server,
the layout image document data is label image data prepared by combining the label section image data and any one or more of the image data and the character data and
the label image data is provided or sent to the printing device so as to be printable to a printing medium suitable for making a label.

Herewith, even in an environment having no image edit function, it is possible to convert holding image data to image data in a format suitable for making a label by using network. Accordingly, it is possible to make a label in an easy way, by sending the data through an external memory medium, data wireless communication or the like to a printer.

With the image layout system using communication network of this invention,
New Year's card section image data, to be a section of New Year's card image is stored in the server,
the layout image document data is New Year's card image data prepared by combining the New Year' s card section image data and any one or more of the image data and the character data and
the New Year's card image data is provided or sent to the printing device so as to be printable to a printing medium suitable for making a New Year's card.

Herewith, even in a situation having no image edit function, it is possible to convert image data or character data being sent to image data in a format suitable for making a New Year's card by using network. Accordingly, it is possible to make a New Year' s card in an easy way, by sending the data through an external memory medium, data wireless communication or the like to a printer.

With the image layout system using communication network of this invention,
Christmas card section image data, to be a section of Christmas card image is stored in the server,
the layout image document data is Christmas card image data prepared by combining the Christmas card section image data and any one or more of the image data and the character data and
the Christmas card image data is provided or sent to the printing device so as to be printable to a printing medium suitable for making a Christmas card.

Herewith, even in a situation having no image edit function, it is possible to convert image data or character data being sent to image data in a format suitable for making a Christmas card by using network. Accordingly, it is possible to make a Christmas card in an easy way, by sending the data through an external memory medium, data wireless communication to a printer.

With the image layout system using communication network of this invention,
business card section image data, to be a section of business card image is stored in the server,
the layout image document data is business card image data prepared by combining the business card section image data and any one or more of the image data and the character data and
the business card image data is provided or sent to the printing device so as to be printable to a printing medium suitable for making a business card.

Herewith, even in a situation having no image edit function, it is possible to convert character data being sent to image data in a format suitable for making a business card by using network. Accordingly, it is possible to make a business card in an easy way, by sending the data through an external memory medium, data wireless communication or the like to a printer.

### BRIEF DESCRIPTION OF THE DRAWINGS

Fig.1 shows an entire configuration of an embodiment of the present invention.
Fig.2 shows a configuration of a cell-phone.
Fig.3 shows a configuration of a server.
Fig.4 shows a flow-chart related to making an album.
Fig.5 shows a menu screen.
Fig.6 shows an album sheet selecting screen.
Fig.7 shows number of album pages selecting screen.
Fig.8 shows a sheet suitable for album image data.
Fig.9 shows a result of the sheet of Fig.8 having the album image data printed.
Fig.10 shows a state of the sheet of Fig.9 cut to pieces.
Fig.11 shows a state of putting them together to be an album.
Fig.12 shows a flow-chart related to producing a sticker.
Fig.13 shows a sticker sheet selecting screen.
Fig.14 shows number of stickers selecting screen
Fig.15 shows a sticker design selecting screen.
Fig.16 shows a sticker layout selecting screen.
Fig.17 shows a result of the sheet having the sticker image data printed.
Fig.18 shows a flow-chart related to making a business card.
Fig. 19 shows a business card vertical or horizontal selecting screen.
Fig.20 shows a business card layout selecting screen.
Fig.21 shows a result of the sheet having the business card image data printed.

### BEST MODES FOR CARRYING OUT THE INVENTION

### (First Embodiment)

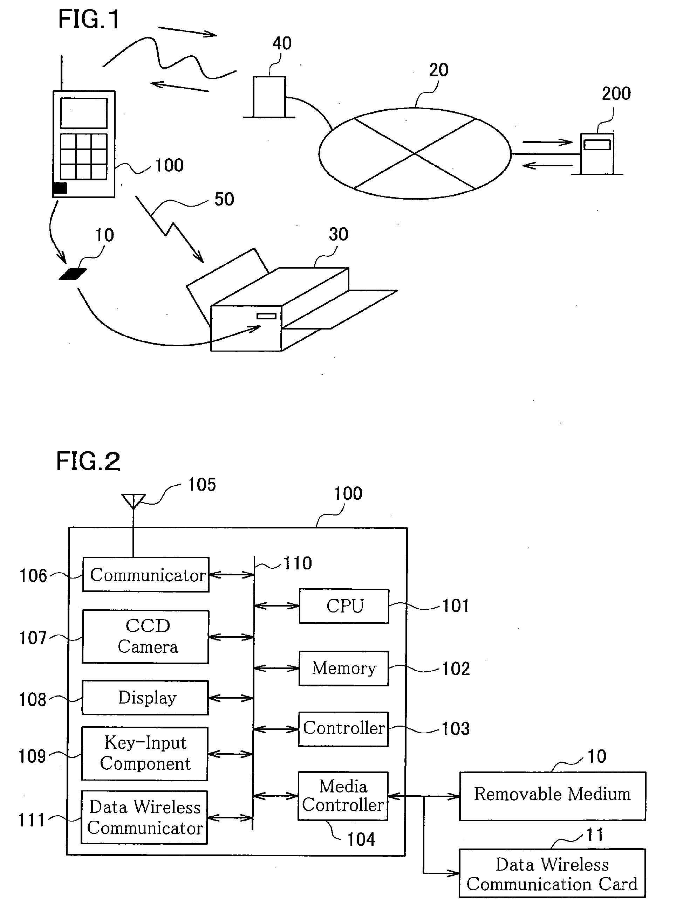

Hereinafter, an embodiment of the present invention will be explained referring to the attached figures. Fig.1 shows an entire image layout system using communication network relating one embodiment of the present invention. This embodiment is a system that applies to image data or character data uploaded by a user from a cell-phone with camera appropriate image quality modification and layout to obtain image data or document data, so as to be downloaded to the user. The user stores the downloaded image data and document data in a removable medium equipped for the cell-phone, and sends the image data and document data by inserting it into the slot of the printer having slots for removable media, or by sending them by data wireless communication, so as to print them on a desired sheet. The entire configuration of this embodiment is shown in Fig.1, and comprising internet network 20, a server 200 connected thereto, a base station of cell-phone network 40, a cell-phone 100 held by a user (mobile communication terminal: communication terminal), a removable medium 10 equipped for the cell-phone 100 and a printer (30) having a slot for removable media or capable of receiving date wirelessly.

A main configuration of the cell-phone 100 held by the user is shown in Fig.2. The cell-phone 100 comprises a CPU 101, a memory 102, a controller 103, a media controller 104, an antenna 105, a communicator 106, a CCD camera 107, a display 108, key-input component 109, and a bus 110 connecting thereof. The media controller controls all operations and controls related to the removable medium such as writing, reading, insertion and ejection. As shown in Fig.2, in a case that the cell-phone 100 is provided with a data wireless communicator 111, using thereof allows data wireless communication such as IrDA and Bluetooth™ (Bluetooth™ is a trademark of Bluetooth SIG Inc). Also, data wireless communication of the cell-phone 100 can be possible by being provided with a data wireless communication card 11 instead of the removable medium 10.

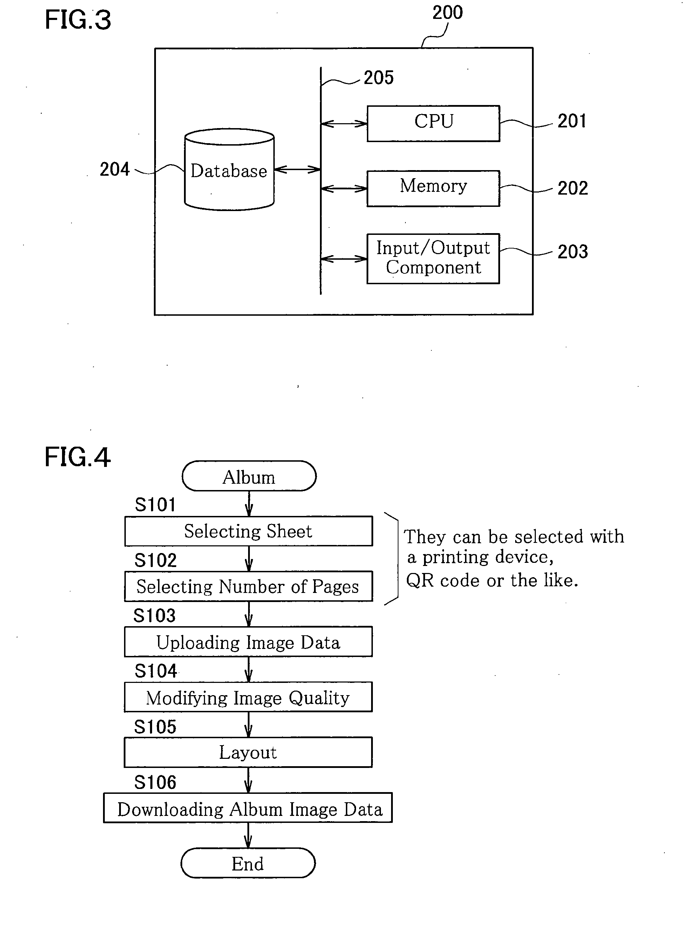

A main configuration of the sever 200 is shown in Fig. 3. As shown in the figure, the server 200 mainly comprises a CPU 201, a memory 202, an input/output component 203, a database 204 and a bus 205 connecting thereof.

Hereinafter, the image layout system relating to this invention will be explained basically in chronological order. In this embodiment, a starting point of the system is when the user accesses to the server 200 with the cell-phone 100. The user has demand to put a plurality of image data stored in the cell-phone 100 together in an album, or to produce business cards for urgent requirement. First, the first embodiment will be explained in a case of holding a plurality of image data, which have been taken with the CCD camera 107 provided with the cell-phone 100 held by the user, in the cell-phone, and wishing to put them together in an album easily by using the image layout system.

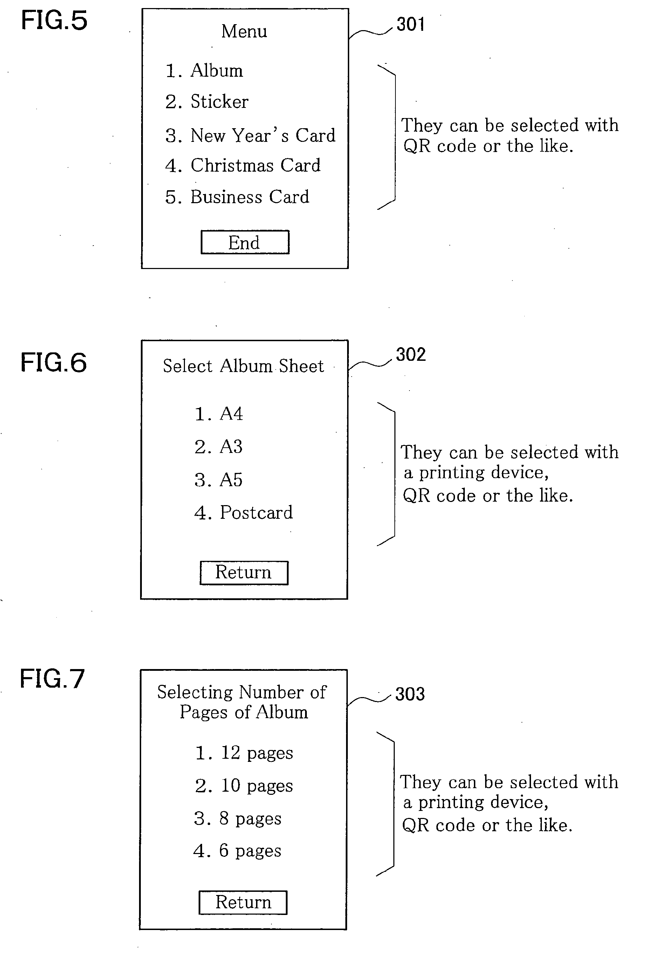

By detecting the user's access to the server 200 by the input/output component 203, the CPU 201 executes programs in the memory 202 in a predetermined order in the server 200. Therewith, a menu screen 301 shown in Fig.5 firstly appears on the display 108 of the user side's cell-phone 100 (There is some cases for actual implementation that procedures for membership registration or fee payment are included, however these procedures are not constituent features of the present invention, and therefore will be omitted in the following explanation). On the menu screen 301, as shown in Fig.5, all the available services for users are shown such as 1. Album, 2. Sticker, 3. New Year's Card, 4. Christmas Card 5. Business Card or the like. Obviously, all the services shown on the screen are not only the ones shown in Fig.5, and they can be modified appropriately according to each embodiment. Also, they may be modified according to version upgrade of the system. The user selects a required service from the menu screen 301, and sends it to the server 200 by operating the key-input component 109 of the cell-phone 100. As explained above, the embodiment 1 explains a case of selecting 1.Album.

For this system, the flow chart of Fig.4 summarizes procedure after the user selecting 1.Album. As shown in this figure, the procedure comprises Selecting Sheet S101, Selecting Number of Pages S102, Uploading (Sending) Image Data S103, Modifying Image Quality S104, Layout S105 and Downloading (Returning) Album Image Data S106.

By the user selecting 1.Album, the display 108 of the cell-phone 100 changes to an album sheet selecting screen 302 shown in Fig.6 (corresponding to S101 of Fig.4). On this screen, the user selects the album sheet size on which a plurality of the image data will be laid out at the end. As shown in Fig. 6, all the available sheet sizes for this system are displayed, such as 1.A4, 2.A3, 3.A5 and 4.Postcard.The user sends a desired sheet size to the server 200 by operating the key-input component 109 of the cell-phone 100 appropriately. Here, supposed that 1.A4 is selected, the explanation will be continued below.

By the user selecting the sheet size, the display 108 of the cell-phone 100 changes to an number of album pages selecting screen 303 (corresponding to S102 of Fig.4). On this screen, the user selects how many image data will be laid out on one page of the album sheet at the end. As shown in Fig. 7, all the available numbers for this system are displayed, such as 1.12 pages, 2.10 pages, 3.8 pages, 4.6 pages or the like. The user sends a desired number of pages to the server 200 by operating the key-input component 109 of the cell-phone 100 appropriately. Here, supposed that 1.12 pages is selected, the explanation will be continued below. Also, the sheet size and the number of pages may be set at a printer. Accordingly, the sheet size and the number of pages can be selected at a printer instead of key-input component as above.

As above, key-input component is used for selecting the service, selecting the album sheet and selecting the number of pages. However, selection of the above items can be done by entering information in a format of identification code such as QR code printed on a printing sheet corresponded to the desired service to the cell-phone 100, so as to send data. Then, use of identification code is not limited only for the above items, but it can be employed appropriately for a variety of embodiments of the present invention.

By the user completing selection of the sheet and selection of the number of pages, next the CPU 201 of the server 200 requires uploading a number, which is selected by the user side, of the image data (corresponding to S103 of Fig.4). The user uploads (sends) the image data (12 pages for this example) according to instructions from the server side shown on the display 108 of the cell-phone 100. The screen display for this procedure will be omitted, however it is easy to use for users if the system has the server prompting selection of images one by one respectively, and instructing uploading thereof.

By the user completing upload of the selected numbers of the image data, the server 200 moves to a procedure of modifying image quality of this image data (corresponding to S104 of Fig.4). This system is provided with a standard image modification program, and executes it automatically. The standard image modification program can be, for example, brightness improvement of a picture taken in dark, contrast improvement of a picture lack in color saturation. This image quality modification procedure is not only limited for automatic execution. The system can be modified to execute only modifications the user desires, being interactive with the user.

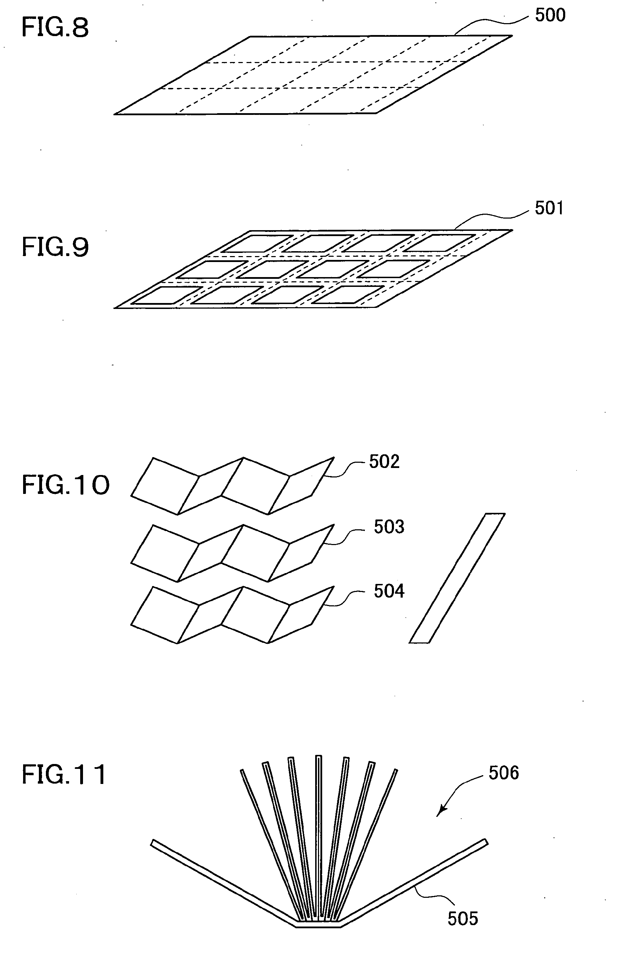

After executing the program of applying image quality modification to the image data uploaded by the user, next the server 200 moves to a procedure of layout of a plurality of the image data on the one sheet (corresponding to S105 of Fig.4). With this Embodiment 1, as stated above, 12 pictures of the image data are laid out on an A4 sheet. This procedure will be explained with Figs. 8 and 9. Fig. 8 shows an A4 sheet for album produced for disposing 12 pictures, having regions on which 12 images will be printed, and having perforations therebetween. The perforations are formed for folding and cutting off. The server 200 lays out 12 pictures of the image data applied with image quality modification on the A4 sheet, as shown in Fig. 9 (Obviously the above explanation assumes the final printed layout, and at this stage the actual printing is not done yet). Then, the sever 200 converts 12 pictures of the image data applied with the above layout into the image data of one page.

The server 200 downloads (returns) the image data of one page formed from 12 pictures of the image data as above to the cell-phone 100 finally (corresponding to S106 of Fig.4). This downloading procedure is executed promptly and automatically after completing the layout procedure. With this, the server 200's role of this system completes.

After receiving with the cell-phone 100 one page of the image data downloaded from the server 200, the user finishes access to the server 200. Next, the user moves to a procedure of sending this image data to the printer 30. A case of using a removable medium will be explained below. In this case, first, the user conducts recording operation of this image data to a removable medium 10 provided with the cell-phone 100. After receiving recording operation order from the user, the CPU 101 of the cell-phone 100 conducts recording of the album image data to the removable medium 10 through the media controller 104.

After completing recording to the removable media 10, the user ejects this medium 10 from the cell-phone 100. Then, the removable medium 10 is inserted to a slot of the printer 30 provided with the slot for removable media. Today, convenience stores etc. often have a printer provided with slots for removable media. Of course, if the printer owned by the user himself is provided with slots for removable media, this printer can be also used.

Next, the user prints the image data recorded on the removable medium on an A4 sheet by using the printer. As explained above, 12 pictures will be printed, as shown in Fig.9, on a sheet 500 shown in Fig.8. Also, it's possible to print the album data downloaded to the cell-phone 100 from the server 200 by sending it to the printer 30 through data wireless communication 50 as shown in Fig.1.

In a case of a sheet 501 of Fig.9, next the user cuts it off along perforations, as shown in Fig.10. Herewith, the sheet is divided into 3 sections, 502, 503, 504, and further folded as shown in this figure. Then finally, as shown in Fig.11, the three sections are disposed in an appropriate order, attached to a front page section 505 produced elsewhere. Herewith, accordingly 12 pictures taken with the CCD camera 107 of the cell-phone 100 is applied with image quality modification, and then laid out, so that an album 506 is finally completed.

### (Modified Embodiment 1)

Next, a modified embodiment of the image layout system using communication network system relating to this invention will be explained referring the attached figures. For this modified embodiment, it will be explained in a case of the user selecting 2.Sticker on the menu screen 301 of Fig.5.

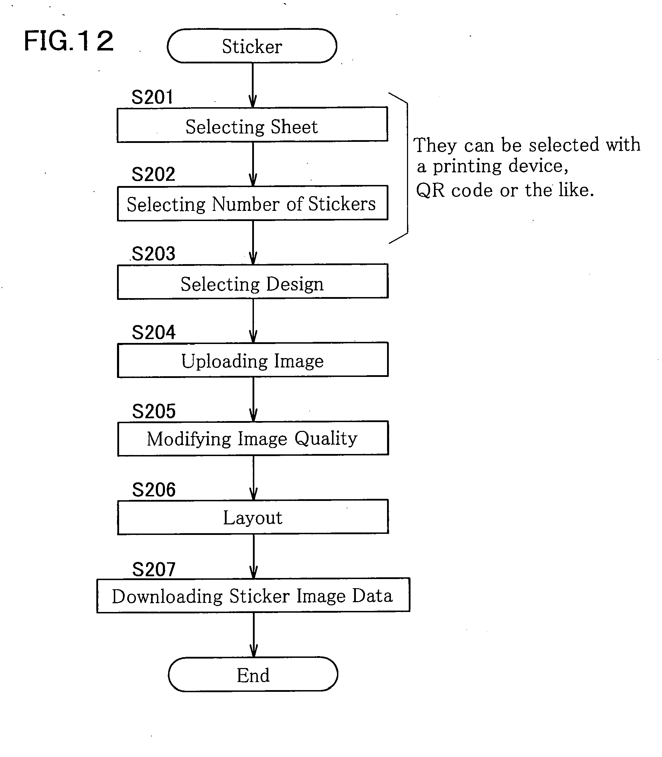

For this system, Fig.12 summarizes procedure after the user selecting 2.Sticker. As shown in this figure, the procedure comprises Selecting Sheet S201, Selecting Number of Stickers S202, Design Selection S203, Uploading Images S204, Modifying Image Quality S205, Layout S206 and Downloading Sticker Images S207.

When the user selects 2. Sticker, the display 108 of the cell-phone 100 changes to a sticker sheet selecting screen 304 (corresponding to S201 of Fig.12). Similarly to the above album sheet selecting screen 302, the user selects size of the sheet, on which the stickers will be printed out at the end, on this screen. Here, supposed that 3. Postcard is selected, the explanation will be continued below.

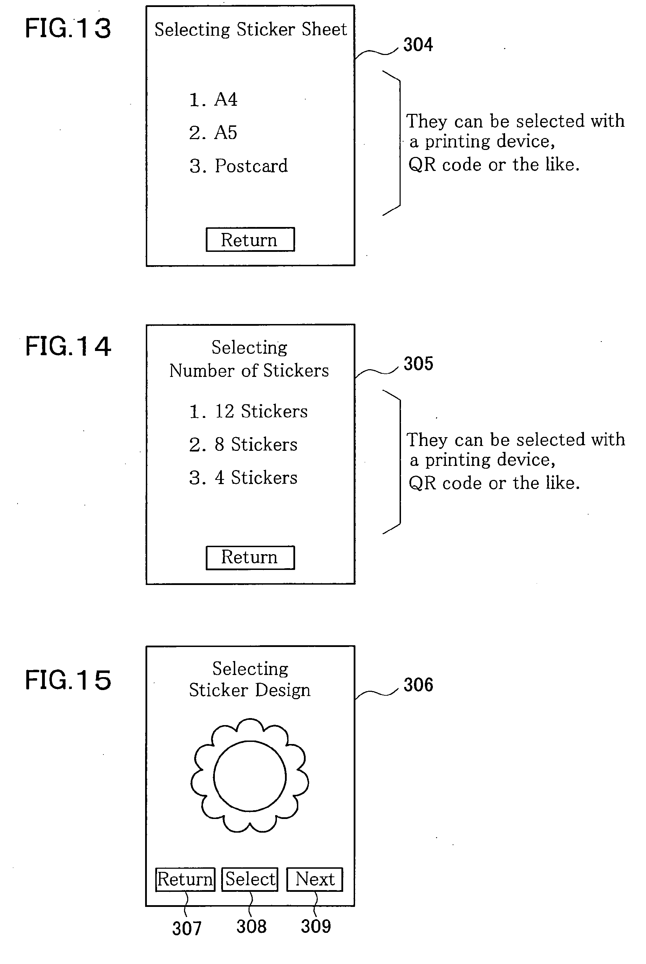

After the user selecting the sheet for the sticker, the server 200 changes the display 108 of the cell-phone 100 to a number of stickers selecting screen 305, shown in Fig.14 (corresponding to S202 of Fig.12). On this screen, the user selects how many stickers will be printed on one sheet. A method is similar to selecting the sheet or the like. Here, supposed that 3.4 stickers is selected, the explanation will be continued below. Additionally, the sheet size and the number of stickers can be sometimes set with a printer. Accordingly, it is possible to select the sheet size and the number of stickers with the printer instead of the key-input component as above.

After the user selecting the number of stickers, the server 200 changes the display 108 of the cell-phone 100 to a sticker design selecting screen 306 as shown in Fig. 15 (corresponding to S203 of Fig.12). Here, the CPU 201 of the server 200 displays sticker design examples stored in the database 204 on the display 108. Every time a "next" button 309 on a lower part of this display is clicked by the user operating the key-input component 109 of the cell-phone 100, the CPU 201 changes display to the next sticker example. Similarly, every time a "return" button 307 is clicked, it returns to display of the sticker design example one before. Accordingly the user can display all the sticker design examples stored in the database 204. Then, when the user clicks a "select" button 308 in a state that the desired sticker design example is displayed, the sticker design is selected.

After the user completing Selecting Sheet S201, Selecting Numbers of Stickers S202 and Design Selection S203 all, the CPU 201 of the server 200 next requests the user to upload the image data (corresponding to S204 of Fig.12). According to the instructions from the server shown on the display 108 of the cell-phone 100, the user uploads the image data. The screen displays for this procedure is omitted.

After the user completing upload of the image data, the server 200 moves to a procedure of image quality modification to this image data (corresponding to S205 of Fig.12). This system is provided with a standard image modification program, and executes it automatically. The standard image modification program can be, for example, brightness improvement of a picture taken in dark, contrast improvement of a picture lack in color saturation. This image quality modification procedure is not only limited for automatic execution. Being interactive with the user, the system can be modified to execute only modifications the user desires.

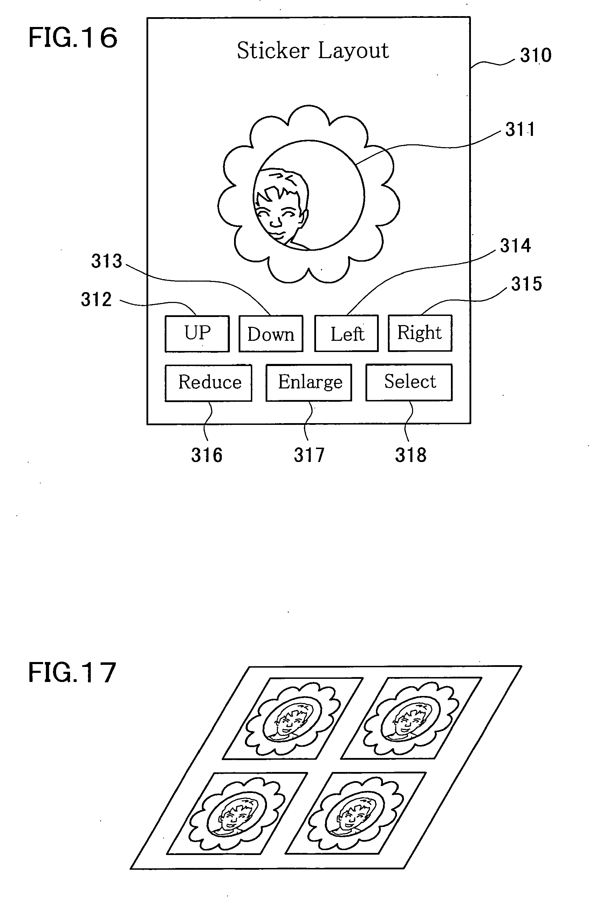

After executing the program of applying image quality modification to the image data uploaded by the user, next, the server 200 moves to a procedure of layout of the uploaded image data on the sticker design (corresponding to S206 of Fig.12). Fig.16 shows a sticker layout screen 310. Regarding this Modified Embodiment 1, the uploaded image is displayed only on a window 311, which is at a center of the sticker design, the user adjusts position and size of the uploaded image by appropriately clicking a "Up" button 312, a "Down" button 313, a "Left" button 314, a "Right" button 315, a "Reduce" button 316 and a "Enlarge" button 317 disposed on the layout screen 310, for example, adjusting to place the face image appropriately on center of the window 311. Then, a "select" button 318 is clicked when it is at the appropriate position and size, so as to determine the sticker image.

The sticker image data of one sheet prepared as above, is downloaded to the user's cell-phone 100 at the end (corresponding to S207 of Fig.12). This download procedure is executed automatically straight after completion of the layout procedure. With that, the server 200's role for this Modified Embodiment 1 is completed.

After receiving with the cell-phone 100 the sticker image data of one sheet downloaded from the server 200, the user finishes access to the server 200. Next, the user moves to a procedure of sending this image data to a printer 30. A case of using a removable medium will be explained below. In this case, first the user conducts recording operation of this image data to a removable medium 10 provided with the cell-phone 100. After receiving recording operation order from the user, the CPU 101 of the cell-phone 100 implements recording the sticker image data to the removable medium 10 through the media controller 104.

After completing recording the sticker image to the removable media 10, the user ejects this medium 10 from the cell-phone 100. Then, the removable medium 10 is inserted to a slot of the printer 30 provided with slots for removable media.

Finally, the user prints the image data recorded on the removable medium on a sticker sheet, which is a postcard size (that is applied with adhesive on the back surface, and having peeling paper), by using the printer 30. Herewith, the sticker shown in Fig. 17 is completed. Additionally, it's possible to print the sticker data downloaded to the cell-phone 100 from the server 200 by sending it to the printer 30 through data wireless communication 50 as shown in Fig.1. The sticker sheet shown in Fig.17 is suitable for the sticker design used for this system, and the sticker designs are respectively placed within predetermined cutoff lines. Of course, a sticker sheet prepared uniquely by the user may be used.

### (Modified Embodiment 2)

Next, the second modified embodiment of the image layout system using the communication network relating to this invention will be explained referring to the attached figures. Regarding this Modified Embodiment 2, it will be explained in a case of the user selecting 5. Business Card on the menu screen 301 of Fig.5.

This Modified Embodiment 2 is a system supposing a situation of having not enough business cards urgently during business trip or the like. Today, individuals widely produce business cards using a personal computer (PC), a business card producing software, a printer and printing paper for business cards. Accordingly, it is not an unusual situation that a stationary shop around the business trip destination sells printing paper for business cards. The system explained below is a system which does not require a PC or a business card producing software, and as long as you have printing paper for business cards and a printer capable of receiving data from removable media or wireless network, it is possible to produce business cards easily even during business trip or the like.

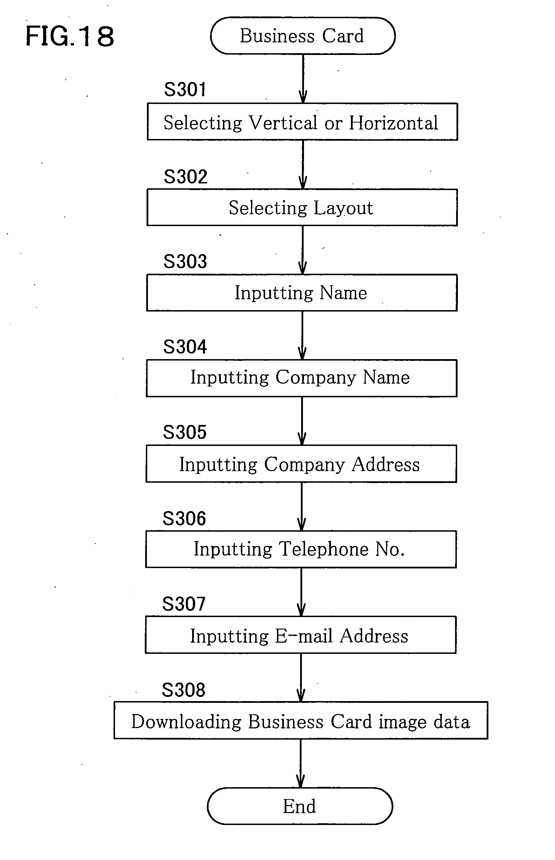

Regarding this system, the procedure after the user selecting 5.Business Card is summarized in Fig.18: As shown in the figure, the procedure comprises Selecting Vertical or Horizontal S301, Selecting Layout S302, Inputting Name S303, Inputting Company Name S304, Inputting Company Address S305, Inputting Telephone No. S306, Inputting E-mail Address S307 and Downloading Business Card image data S308.

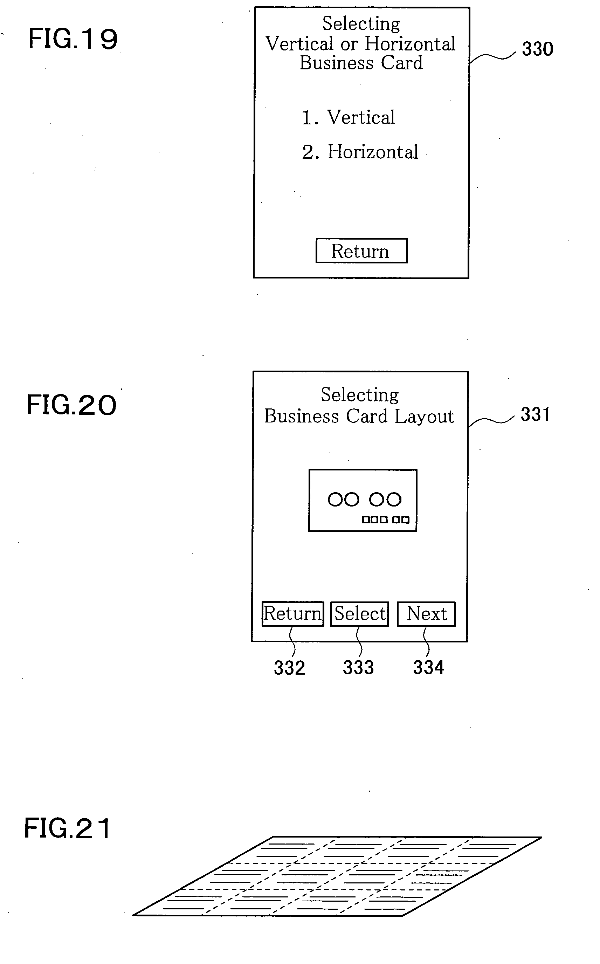

By the user selecting 5. Business Card, the display 108 of the cell-phone 100 changes to a business card vertical or horizontal selection screen 330 as shown in Fig. 19 (corresponding to S301 of Fig. 18). The user selects a vertical business card or a horizontal business card on this screen. Here supposing that 2. Horizontal is selected, it will be explained below.

After the user selecting the vertical or horizontal business card, the server 200 changes the display 108 of the cell-phone 100 to a business card layout selecting screen 331 shown in Fig.20 (corresponding to S302 of Fig.18). Here, the CPU 201 of the server 200 shows business card layout examples stored in the data base 204 on the display 108. Every time a "next" button 334 on a lower part of this display is clicked by the user operating the key-input component 109 of the cell-phone 100, the CPU 201 changes display to the next business card example. Similarly, every time a "return" button 332 is clicked, it returns to display of the business card design example one before. Accordingly the user can display all the business card design examples stored in the database 204. Then, when the user clicks a "select" button 333 in a state that the desired business card design example is displayed, the business card design is selected.

After the user completing both Selecting Vertical or Horizontal S301 and Selecting Layout S302, next the CPU 201 of the server 200 requests the user to upload character data required for producing business cards (corresponding to S303 to S307 of Fig.18). According to instruction from the server shown on the display 108 of the cell-phone 100, the user uploads character data according to the procedure shown in Fig. 18. Screen displays for this procedure are omitted.

First, the server 200 requests the user to enter a name (corresponding to S303 of Fig.18). The user enters the name, as instructed, using the key-input component 109. Similarly below, according to instructions form the server 200, the user enters a company name, a company address, a telephone number and e-mail address (corresponding to S304 to S307 of Fig.18).

After the user uploading all the above character data, the server 200 moves to a procedure of producing business card image data. The server 200 prepares image data having business card image laid out in a form suitable for the above printing paper for business cards. Here, the business card data may be data in a document format.

The business card image data prepared as above, is downloaded to the user's cell-phone 100 at the end (corresponding to S208 of Fig.18). This download procedure is executed automatically straight after completion of the layout procedure. With that, the role of the server 200 for this modified embodiment is completed.

After receiving with the cell-phone 100 the business card image data downloaded from the server 200, the user finishes access to the server 200. Next, the user moves to a procedure of sending this image data to the printer 30. A case of using a removable medium will be explained below. In this case, first the user conducts recording operation of this image data to a removable medium 10 provided with the cell-phone 100. After receiving recording operation order from the user, the CPU 101 of the cell-phone 100 implements recording the business card image data to the removable medium 10 through the media controller 104.

After recording the business card image to the removable media 10, the user ejects this medium 10 from the cell-phone 100. Then, the removable medium 10 is inserted to a slot of the printer 30 provided with slots for removable media.

Finally, the user prints the business card image data recorded on the removable medium on a sheet of printing paper for business cards, by using the printer 30. Herewith, the business cards shown in Fig. 21 are completed. Additionally, it' s possible to print the business card image data downloaded to the cell-phone 100 from the server 200 by sending it to the printer 30 through data wireless communication 50 as shown in Fig.1. Of course, regarding the above modified example, the items printed on the business cards are not limited the ones above, and they can be modified accordingly, such as changing number of the items.

This invention is not limited only for the embodiments and the modified embodiments explained above, but can realize a variety of standard printed materials such as New Year's cards, Christmas cards, greeting cards, handbills, tickets, posters, calendars and transfer films as printing for image and document data without a personal computer.

## Claims

1. An image layout system using communication network comprising:
a communication terminal provided with a memory means:
a server connected to a communication network:
a sending means capable of sending any one or more of image data and character data though the communication network from the communication terminal to the server:
a converting means capable of storing in the server and converting any one or more of the image data and the character data to one or more of layout image document data of any one or more of image data and document data having the image data and the character data applied with predetermined layout:
a returning means capable of returning the layout image document data through the communication network having applied the conversion thereto from the server to the communication terminal; and
a storage means capable of storing the layout image document data communicated by the returning means in the memory means of the communication terminal, wherein
the layout image document data stored in the memory means is provided or sent to a printing device, so that the layout image document data is allowed to be printed on a predetermined printing medium by the layout image document data.

2. The image layout system using communication network as claimed in claim 1, wherein the communication terminal is a mobile communication terminal.

3. The image layout system using communication network as claimed in claim 1, wherein the communication terminal is a cell-phone having a camera, and one or more of the image data sent from the communication terminal is picture image data taken with the camera provided with the cell-phone having the camera.

4. The image layout system using communication network as claimed in any one of claims 1 to 3, wherein
the image data is picture image data,
any one or more of the image data and the character data is a plurality of the picture image data,
the layout image document data is album image data of image data having a plurality of the picture image data arranged with a predetermined layout on one or more pieces of paper having a predetermined size, and
the album image data is provided or sent to the printing device, so as to be printable to a printing medium suitable for making an album.

5. The image layout system using communication network as claimed in claim 4, wherein character data is added to the album image data with a predetermined layout.

6. The image layout system using communication network as claimed in any one of claims 1 to 3, wherein
sticker section image data, to be a section of sticker image is stored in the server,
the layout image document data is sticker image data prepared by combining the sticker section image data and any one or more of the image data and the character data and
the sticker image data is provided or sent to the printing device so as to be printable to a printing medium suitable for making a sticker.

7. The image layout system using communication network as claimed in any one of claims 1 to 3, wherein
label section image data, to be a section of label image is stored in the server,
the layout image document data is label image data prepared by combining the label section image data and any one or more of the image data and the character data and
the label image data is provided or sent to the printing device so as to be printable to a printing medium suitable for making a label.

8. The image layout system using communication network as claimed in any one of claims 1 to 3, wherein
New Year's card section image data, to be a section of New Year's card image is stored in the server,
the layout image document data is New Year's card image data prepared by combining the New Year's card section image data and any one or more of the image data and the character data and
the New Year's card image data is provided or sent to the printing device so as to be printable to a printing medium suitable for making a New Year's card.

9. The image layout system using communication network as claimed in any one of claims 1 to 3, wherein
Christmas card section image data, to be a section of Christmas card image is stored in the server,
the layout image document data is Christmas card image data prepared by combining the Christmas card section image data and any one or more of the image data and the character data and
the Christmas card image data is provided or sent to the printing device so as to be printable to a printing medium suitable for making a Christmas card.

10. The image layout system using communication network as claimed in any one of claims 1 to 3, wherein
business card section image data, to be a section of business card image is stored in the server,
the layout image document data is business card image data prepared by combining the business card section image data and any one or more of the image data and the character data and
the business card image data is provided or sent to the printing device so as to be printable to a printing medium suitable for making a business card.

11. The image layout system using communication network as claimed in any one of claims 1 to 10, wherein image quality of one or more of the image data sent from the communication terminal is modified at the server.

12. The image layout system using communication network as claimed in any one of claims 1 to 11, wherein there is a blank area predetermined to be blank after printing within the layout image document data, and advertising information may be arranged on the blank area by the layout.

13. The image layout system using communication network as claimed in any one of claims 1 to 12, wherein there is a blank area predetermined to be blank after printing within the layout image document data, and lot, fortune-telling, character image, identification code such as QR code and bar-code can be arranged on the blank area by the layout.
